(19) Europäisches Patentamt / European Patent Office / Office européen des brevets

(11) **EP 4 199 348 B1**

(12) **FASCICULE DE BREVET EUROPEEN**

(45) Date de publication et mention de la délivrance du brevet:
**23.10.2024 Bulletin 2024/43**

(21) Numéro de dépôt: **22212943.9**

(22) Date de dépôt: **12.12.2022**

(51) Classification Internationale des Brevets (IPC):
**H02S 50/00** *(2014.01)*    **H02S 50/10** *(2014.01)*

(52) Classification Coopérative des Brevets (CPC):
**H02S 50/00; H02S 50/10;** Y02E 10/50

(54) **PROCÉDÉ ET DISPOSITIF DE DIAGNOSTIC DE FONCTIONNEMENT D'UNE CHAÎNE DE MODULES PHOTOVOLTAÏQUES COMPRENANT AU MOINS UN MODULE PHOTOVOLTAÏQUE**

VERFAHREN UND VORRICHTUNG ZUR DIAGNOSE DES BETRIEBS EINER STRING VON PHOTOVOLTAIKMODULEN MIT MINDESTENS EINEM PHOTOVOLTAIKMODUL

METHOD AND DEVICE FOR DIAGNOSING THE OPERATION OF A STRING OF PHOTOVOLTAIC MODULES COMPRISING AT LEAST ONE PHOTOVOLTAIC MODULE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **14.12.2021 FR 2113506**

(43) Date de publication de la demande:
**21.06.2023 Bulletin 2023/25**

(73) Titulaire: **Commissariat à l'énergie atomique et aux énergies alternatives**
**75015 Paris (FR)**

(72) Inventeurs:
• **LESPINATS, Sylvain**
**38054 Grenoble Cedex 9 (FR)**
• **REVEL, Arnaud**
**38054 Grenoble Cedex 9 (FR)**
• **PLISSONNIER, Alexandre**
**38054 Grenoble Cedex 9 (FR)**

(74) Mandataire: **Lavoix**
**2, place d'Estienne d'Orves**
**75441 Paris Cedex 09 (FR)**

(56) Documents cités:
• **GUPTA RAHUL KUMAR ET AL: "Compound Admittance Matrix Estimation of Three-Phase Untransposed Power Distribution Grids Using Synchrophasor Measurements", IEEE TRANSACTIONS ON INSTRUMENTATION AND MEASUREMENT, IEEE, USA, vol. 70, 24 June 2021 (2021-06-24), pages 1 - 13, XP011865678, ISSN: 0018-9456, [retrieved on 20210709], DOI: 10.1109/TIM.2021.3092063**
• **ILYUSHIN PAVEL ET AL: "Adjusting the Requirements to the Allowable Current and Voltage Error in Active Power Systems", 2021 URAL-SIBERIAN SMART ENERGY CONFERENCE (USSEC), IEEE, 13 November 2021 (2021-11-13), pages 1 - 6, XP034063598, DOI: 10.1109/USSEC53120.2021.9655728**

**Description**

La présente invention concerne un procédé et un dispositif de diagnostic de fonctionnement d'une chaîne de modules photovoltaïques comprenant au moins un module photovoltaïque. Le document GUPTA RAHUL KUMAR ET AL: "Compound Admittance Matrix Estimation of Three-Phase Untransposed Power Distribution Grids Using Synchrophasor Measurements",IEEE TRANSACTIONS ON INSTRUMENTATION AND MEASUREMENT, IEEE, USA, vol. 70, 24 juin 2021 (2021-06-24), pages 1-13, XP011865678,ISSN: 0018-9456, DOI: 10.1109/TIM.2021.3092063 est relevant pour la technologie décrite ici.

L'invention se situe dans le domaine de la production d'électricité par des installations photovoltaïques, et plus particulièrement dans le domaine de la surveillance du bon fonctionnement de telles installations.

De manière connue, les installations photovoltaïques comprennent une ou plusieurs chaînes de modules photovoltaïques, chaque chaîne comprenant un ensemble de modules photovoltaïques, pouvant se réduire à un seul module photovoltaïque, les chaînes étant connectées en série et/ou en parallèle entre une borne positive et une borne négative, chaque module étant composé d'au moins une cellule photovoltaïque, en général une matrice de cellules, chaque cellule étant une unité configurée pour produire un courant électrique à partir de l'énergie lumineuse. Une telle installation est adaptée pour alimenter en énergie électrique une charge, par exemple un onduleur adapté pour générer des tensions et des courants alternatifs à partir d'une source produisant un courant électrique continu, relié à un réseau électrique alternatif.

Un des problèmes qui se pose dans ce type d'installation est la surveillance de bon fonctionnement de l'installation, et ainsi que le diagnostic en cas de détection de dysfonctionnement.

En effet, une baisse dans la fourniture d'énergie électrique peut provenir de la présence d'ombrage par exemple, qui est susceptible d'affecter une sous-partie des modules photovoltaïques, ou d'autres problèmes nécessitant une maintenance, comme par exemple la présence de salissures, un défaut de transparence du verre, un vieillissement des connectiques.

On connaît des méthodes de diagnostic de fonctionnement de chaînes de modules photovoltaïques à partir de mesures de courant et de tension prélevées sur le site de l'installation, pendant une durée de mesure, formant une courbe (ou caractéristique) de courant en fonction de la tension, notée classiquement courbe I(V). Pour un module photovoltaïque, il a été proposé de modéliser la courbe I(V) par un modèle de fonctionnement de circuit électrique à une diode, caractérisé par des valeurs de résistance série, résistance parallèle, courant de court-circuit $I_{sc}$, tension de circuit ouvert $V_{oc}$, coefficient d'idéalité de la diode. L'analyse de ces valeurs de modélisation permet d'obtenir des informations de diagnostic de fonctionnement.

De plus, il a également été montré que dans le cas de la présence d'ombrage ou toute autre situation dans laquelle un sous-ensemble de modules photovoltaïques fournit moins d'électricité (proportionnellement à sa taille) que le reste de l'installation (par exemple, sous-ensemble de modules comportant des salissures ou autres défauts), le modèle de circuit électrique à une diode n'est pas adéquat, la courbe de courant en fonction de la tension présente une inflexion.

Le brevet FR 18 60499 décrit un procédé de diagnostic de chaîne de modules photovoltaïques, permettant de détecter automatiquement un défaut induisant une inflexion de la courbe I(V) par un modèle électrique dit modèle avec dérivation. Le procédé décrit dans ce brevet comporte :

- une détection d'une première zone linéaire et d'une deuxième zone linéaire de la caractéristique I(V),
- une détermination des paramètres d'un premier modèle électrique sans dérivation correspondant à la caractéristique I(V) mesurée,
- une détermination des paramètres d'un deuxième modèle électrique avec dérivation correspondant à la caractéristique I(V) mesurée,
- une détermination, du meilleur modèle de modélisation de la caractéristique I(V) mesurée entre le modèle sans dérivation et le modèle avec dérivation.

Le procédé proposé dans ce brevet a l'avantage de permettre à la fois de détecter la présence éventuelle d'un défaut de fonctionnement de type « avec dérivation » (i.e. ombrage ou autre défaut induisant une disparité), et de calculer des paramètres de modèle électrique permettant de diagnostiquer d'autres éventuels problèmes de fonctionnement nécessitant maintenance.

Cependant, comme cela a été noté dans ce brevet, les modèles électriques sont complexes : le premier modèle électrique sans dérivation est transcendant (c'est-à-dire qu'il n'admet pas de solutions analytiques) et se compose d'une partie linéaire et d'une partie exponentielle. Cela induit une difficulté de quantification fidèle et rapide d'un écart ou d'une distance entre un modèle et la caractéristique I(V) mesurée.

De plus, les extrémités de la courbe sont difficiles à estimer du fait soit d'un manque de données de mesure de courant/tension, soit d'une trop grande accumulation de données de mesure de courant/tension, ce qui induit du bruit. Dans ces deux cas de figure, des imprécisions calculatoires sont constatées.

Par conséquent, il existe un besoin d'améliorer la précision et la robustesse au bruit dans le cadre de la modélisation des mesures observées, afin d'améliorer le diagnostic de fonctionnement.

A cet effet, l'invention propose, selon un aspect, un procédé de diagnostic de fonctionnement d'une chaîne de modules photovoltaïques comprenant au moins un module photovoltaïque, le procédé comportant une acquisition d'une série de mesures de courant et de tension mesurées durant une période de surveillance, formant une courbe de courant en fonction de la tension, dite courbe I(V). Ce procédé comporte des étapes, mises en oeuvre par un processeur de calcul, de :

- transformation en coordonnées polaires, chaque couple de valeurs de courant et de tension de la courbe I(V) étant transformé en un couple rayon-angle correspondant,
- calcul de paramètres d'un premier modèle électrique d'approximation de ladite courbe I(V), et d'un premier coût représentatif d'un écart entre ledit premier modèle et ladite courbe I(V), en mettant en oeuvre une métrique de distance dans l'espace de coordonnées polaires,
- calcul de paramètres d'un deuxième modèle électrique d'approximation de ladite courbe I(V), et d'un deuxième coût représentatif d'un écart entre ledit deuxième modèle et ladite courbe I(V), en mettant en oeuvre ladite métrique de distance dans l'espace des coordonnées polaires,
- sélection d'un modèle électrique d'estimation de la courbe I(V) parmi lesdits premier modèle électrique d'approximation et deuxième modèle électrique d'approximation en fonction des premier et deuxième coûts,
- diagnostic de fonctionnement en fonction de la valeur d'au moins un paramètre du modèle électrique d'estimation sélectionné.

Avantageusement, le procédé proposé permet, grâce à l'utilisation des coordonnées polaires, de remédier aux inconvénients de l'état de la technique précités, et de permettre une comparaison entre modèles électriques et données de mesure quelle que soit la partie de la courbe I(V) considérée.

Le procédé de diagnostic de fonctionnement selon l'invention peut également présenter une ou plusieurs des caractéristiques ci-dessous, prises indépendamment ou selon toutes les combinaisons techniquement envisageables.

Le procédé comporte en outre une étape d'estimation d'une valeur de courant de court-circuit et d'une valeur de tension en circuit ouvert avant la transformation en coordonnées polaires, correspondant respectivement à des points extrêmes de la courbe I(V), qui sont respectivement un premier point de tension nulle et de courant égal à la valeur de courant de court-circuit ($I_{sc}$), et un deuxième point de tension égale à la valeur de tension en circuit ouvert ($V_{oc}$) et à un courant nul, et dans lequel la transformation en coordonnées polaires est normalisée par lesdites valeurs de courant de court-circuit ($I_{sc}$) et de tension en circuit ouvert.

La transformation en coordonnées polaires normalisée comprend, pour chaque couple de valeurs de courant et de tension une division de la valeur de courant par ladite valeur de courant de court-circuit, et de la valeur de tension par ladite valeur de tension en circuit ouvert.

Pour un couple de valeurs de courant $I_j$ et de tension $V_j$ mesurées, la transformation en coordonnées polaires met en oeuvre le calcul suivant pour obtenir un rayon $\rho_j$ et un angle $\varphi_j$ correspondant:

$$\rho_j = \sqrt{\left(\frac{I_j}{I_{sc}}\right)^2 + \left(\frac{V_j}{V_{oc}}\right)^2} \text{ et } \varphi_j = Arctan\left(\frac{I_j \times V_{oc}}{V_j \times I_{sc}}\right)$$

L'estimation d'une valeur de courant de court-circuit comporte :

- un calcul d'une caractéristique de puissance en fonction de la tension, à partir des mesures de courant et de tension,
- une modélisation, dans une première zone linéaire de la caractéristique de puissance en fonction de la tension, de la caractéristique de puissance en fonction de la tension par un premier modèle de puissance, linéaire ou polynomial, la valeur de courant de court-circuit étant estimée par la dérivée en zéro dudit premier modèle de puissance.

L'estimation d'une valeur de tension en circuit ouvert comporte :

- un calcul d'une caractéristique de puissance en fonction du courant à partir des mesures de courant et de tension,
- une modélisation, dans une deuxième zone linéaire de la caractéristique de puissance en fonction de la tension, de la caractéristique de puissance en fonction du courant par un deuxième modèle de puissance, linéaire ou polynomial, la valeur de tension en circuit ouvert étant estimée par la dérivée en zéro dudit deuxième modèle de puissance.

Le premier modèle électrique d'approximation de ladite courbe I(V), est un modèle électrique dit à une diode, défini par l'équation suivante dans l'espace de coordonnées polaires :

$$I_{ph} + I_0 - \rho(\varphi) \times \frac{\cos(\varphi) + (R_s + R_p) \times \sin(\varphi)}{R_p} - I_0 \times e^{\rho(\varphi) \times \frac{\cos(\varphi) + R_s \times \sin(\varphi)}{N}} = 0$$

Où $\rho(\varphi)$ est le rayon correspondant à l'angle $\varphi$ selon le premier modèle d'approximation, $I_{ph}$, $I_0$, $R_s$, $R_p$ et N sont des paramètres dudit premier modèle électrique.

Le procédé comporte en outre une détermination d'une durée de la période de surveillance pour l'acquisition des mesures de courant et de tension, en fonction d'une table de durées de périodes de surveillance préalablement enregistrée et dépendant de caractéristiques physiques de la chaîne de modules photovoltaïques comprenant au moins un module photovoltaïque à surveiller.

Le procédé comporte en outre un affichage d'un résultat de diagnostic sur une interface homme-machine, indiquant un état de bon fonctionnement ou une présence d'une anomalie dans le fonctionnement dudit au moins un module photovoltaïque.

Selon un autre aspect, l'invention concerne un dispositif de diagnostic de fonctionnement d'une chaîne de modules photovoltaïques comprenant au moins un module photovoltaïque, adapté pour obtenir, d'un module d'acquisition, une série de mesures de courant et de tension mesurées durant une période de surveillance, formant une courbe de courant en fonction de la tension, dite courbe I(V). Ce dispositif comporte un processeur de calcul configuré pour mettre en oeuvre :

- un module de transformation en coordonnées polaires, chaque couple de valeurs de courant et de tension de la courbe I(V) étant transformé en un couple rayon-angle correspondant,
- un module de calcul de paramètres d'un premier modèle électrique d'approximation de ladite courbe I(V), et d'un premier coût représentatif d'un écart entre ledit premier modèle et ladite courbe I(V), en mettant en oeuvre une métrique de distance dans l'espace de coordonnées polaires,
- un module de calcul de paramètres d'un deuxième modèle électrique d'approximation de ladite courbe I(V), et d'un deuxième coût représentatif d'un écart entre ledit deuxième modèle et ladite courbe I(V), en mettant en oeuvre ladite métrique de distance dans l'espace des coordonnées polaires,
- un module de sélection d'un modèle électrique d'estimation de la courbe I(V) parmi lesdits premier modèle électrique d'approximation et deuxième modèle électrique d'approximation en fonction des premier et deuxième coûts,
- un module de diagnostic de fonctionnement en fonction de la valeur d'au moins un paramètre du modèle électrique d'estimation sélectionné.

Le dispositif comporte en outre un module d'estimation d'une valeur de courant de court-circuit $I_{sc}$ et d'une valeur de tension en circuit ouvert $V_{oc}$ à partir des valeurs de courant et de tension acquises.

Le dispositif est configuré pour mettre en oeuvre le procédé de diagnostic de fonctionnement d'une chaîne de modules photovoltaïques comprenant au moins un module photovoltaïque, selon toutes ses variantes de réalisation.

Selon un autre aspect, l'invention concerne un système de diagnostic de fonctionnement comprenant au moins un module photovoltaïque, comportant un module d'acquisition de valeurs d'une série de mesures de courant et de tension mesurées durant une période de surveillance d'au moins un module photovoltaïque de ladite chaîne de modules photovoltaïques, et un dispositif de diagnostic de fonctionnement tel que brièvement décrit ci-dessus.

Selon un autre aspect, l'invention concerne un programme d'ordinateur comportant des instructions logicielles qui, lorsqu'elles sont mises en oeuvre par un dispositif électronique programmable, mettent en oeuvre un procédé de diagnostic de fonctionnement tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 est une représentation schématique d'une chaîne de modules photovoltaïques à laquelle est applicable le procédé de diagnostic de fonctionnement;

[Fig 2] la figure 2 est un exemple de courbe I(V) et de premier modèle d'estimation de la courbe I(V) dans le repère courant/tension;

[Fig 3] la figure 3 est un schéma électrique d'un circuit à une diode de modèle électrique équivalent d'une chaîne de modules photovoltaïques;

[Fig 4] la figure 4 est un ordinogramme des principales étapes d'un procédé de diagnostic de fonctionnement selon un mode de réalisation ;

[Fig 5] la figure 5 est un exemple de caractéristique de puissance en fonction de la tension, et de modélisation par un modèle linéaire permettant d'estimer le courant de court-circuit $I_{sc}$;

[Fig 6] la figure 6 est un exemple de courbe I(V) avec inflexion et deuxième modèle d'estimation de la courbe I(V), dans le cas d'une présence de défaut générant une disparité ;

[Fig 7] la figure 7 représente l'exemple de la figure 6 dans l'espace des coordonnées polaires;

[Fig 8] la figure 8 est un synoptique d'un mode de réalisation de l'estimation de la valeur de courant de court-circuit et de l'estimation de la valeur de tension en circuit ouvert.

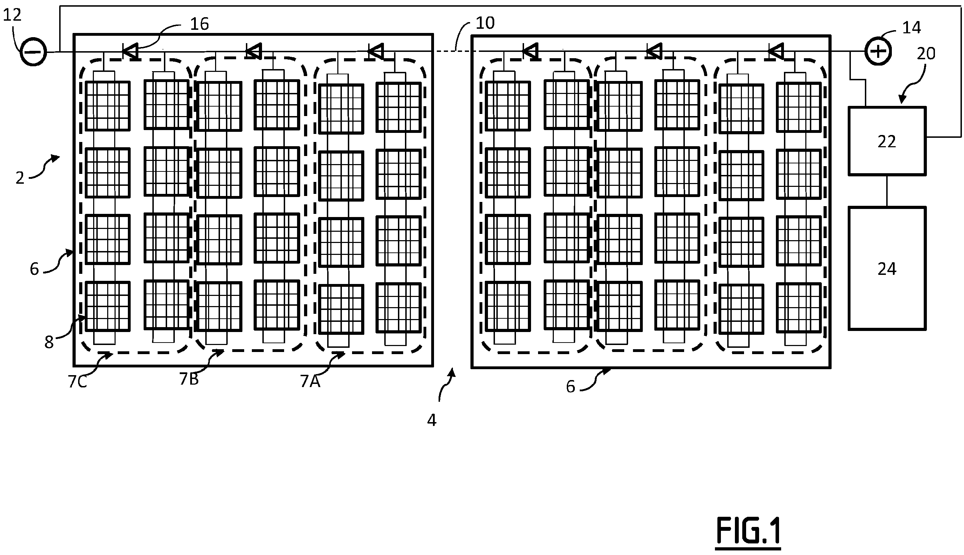

La figure 1 illustre schématiquement une installation photovoltaïque 2, comportant une chaîne 4 de modules photovoltaïques 6, chaque module étant composé d'une pluralité de cellules photovoltaïques 8, par exemple un nombre Q de cellules photovoltaïques, Q étant supérieur ou égal à 1, et de préférence entre 60 et 72

Les cellules photovoltaïques sont connues en soi et ne sont pas décrites en détail ici.

Les modules photovoltaïques 6 sont connectés en série ou en parallèle à un conducteur 10, dont les bornes positive 14 et négative 12 sont connectées à une charge, non représentée.

De manière connue, l'installation 2 est adaptée à fournir de l'électricité à la charge.

Chaque module photovoltaïque 6 comporte plusieurs chaînes de cellules 7A, 7B, 7C, qui sont connectées via des diodes 16, appelées diodes « by-pass », formant un système de déconnexion et de reconnexion d'une ou plusieurs chaines de cellules de chaque module photovoltaïque dans cet exemple.

Bien entendu, il s'agit d'un exemple, toute architecture d'installation photovoltaïque étant applicable pour un diagnostic de fonctionnement.

De plus, la représentation de la figure 1 illustre schématiquement un nombre de diodes 16, étant entendu que d'autres modes de réalisation d'interrupteurs de connexion et de déconnexion sont applicables.

Dans un mode de réalisation, un système de reconnexion de chaîne photovoltaïque tel que décrit dans la demande de brevet FR3074611 A1 est utilisé.

Le système illustré à la figure 1, comprend également un système de diagnostic de fonctionnement 20, comportant un module 22 d'acquisition de valeurs d'une série de mesures de courant I et de tension V mesurées durant une période de surveillance d'au moins un module photovoltaïque de l'installation 2, et un dispositif 24 de diagnostic de fonctionnement 20.

Le dispositif 24 de diagnostic de fonctionnement, qui sera décrit plus en détail ci-après, est un dispositif électronique programmable, comportant un processeur ou un microcontrôleur, et configuré pour mettre en oeuvre des calculs. Ce dispositif est placé soit sur le site de l'installation photovoltaïque, soit à distance, par exemple dans un centre de contrôle, auquel cas il comporte des moyens de communication avec le module 22 d'acquisition de valeurs d'une série de mesures de courant I et de tension V.

Le module d'acquisition 22 fournit des séries de valeurs de courant et de tension à des instants temporels successifs pendant une période de surveillance de la chaîne de modules photovoltaïques comprenant au moins un module photovoltaïque, ou de l'ensemble de chaînes qui forme l'élément de l'installation sur lequel est appliqué le diagnostic de fonctionnement.

Les valeurs de courant et de tension mesurées sont par exemple mémorisées dans une mémoire du système de diagnostic de fonctionnement.

Ces valeurs forment une courbe de courant en fonction de la tension, ou courbe I(V), également appelée caractéristique I(V). Chaque couple de valeurs de courant $I_j$ et de tension $V_j$ mesurés à un instant temporel $t_j$ de la période de surveillance forment un point de la courbe I(V), représentable dans un repère cartésien dans lequel l'axe des ordonnées représente le courant (axe I) et l'axe des abscisses représente la tension (axe V).

Dans la suite, les expressions caractéristique I(V) et courbe I(V) pourront être utilisées indifféremment.

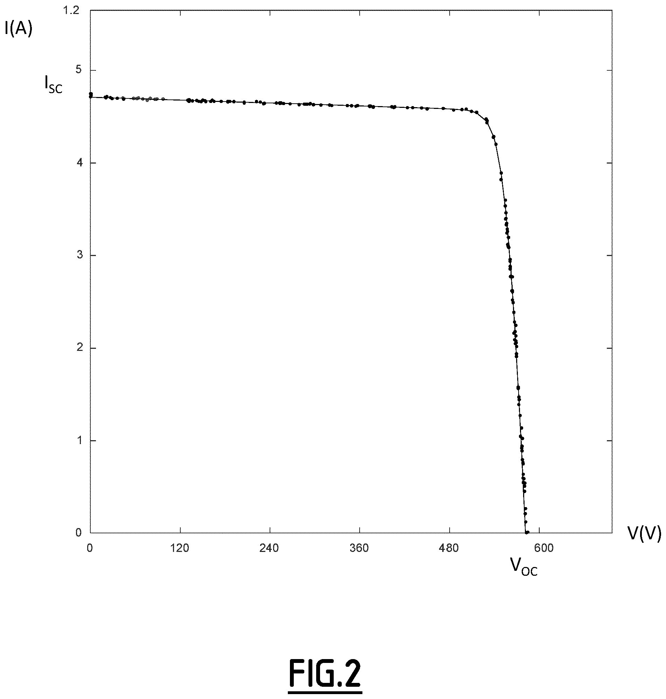

La figure 2 illustre un exemple de points d'une courbe I(V) dans le repère cartésien courant/tension tel que décrit ci-dessus, et un modèle électrique d'estimation de la courbe I(V). Le courant est en Ampères, et la tension en Volts.

Les points de mesure (courbe I(V)) sont représentés par des points, et un modèle électrique d'estimation de la courbe I(V) est représenté en trait plein.

De plus, la valeur de courant de court-circuit $I_{sc}$ et la valeur de tension en circuit ouvert $V_{oc}$ sont représentées à la figure 2. La valeur de courant de court-circuit $I_{sc}$ est la valeur de courant à V=0, ou en d'autres termes l'intersection de la courbe I(V) avec l'axe des ordonnées, et la valeur de tension en circuit ouvert $V_{oc}$ est la valeur de tension correspondant à I=0, ou en d'autres termes l'intersection de la courbe I(V) avec l'axe des abscisses.

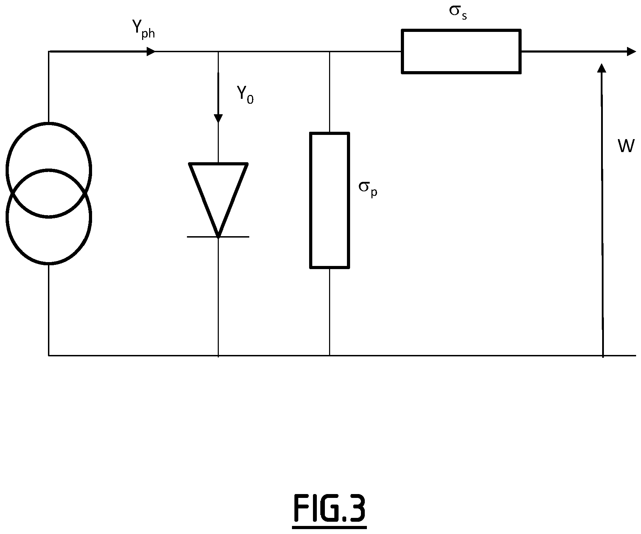

La courbe I(V) est modélisée par un modèle électrique qui est par exemple un modèle électrique à une diode, dont un schéma électrique est représenté à la figure 3.

Le modèle à une diode est un modèle avantageusement utilisé pour modéliser une courbe I(V) d'un module photovoltaïque, car il est relativement simple, étant défini par un ensemble restreint de paramètres.

Un tel modèle est fourni ici à titre d'exemple, étant entendu que l'invention s'applique de manière analogue avec d'autres modèles applicables pour modéliser une courbe I(V) de fonctionnement d'un module photovoltaïque dans un mode de fonctionnement.

Le modèle à une diode est défini par une résistance série $\sigma_s$, une résistance parallèle $\sigma_p$, le photo-courant $Y_{ph}$, le courant d'obscurité de la diode $Y_0$ et un paramètre d'idéalité de la diode.

Dans son application pour définir un modèle d'approximation d'une courbe I(V) de module photovoltaïque, le modèle à une diode s'écrit :

[MATH 1]

$$Y = Y_{ph} - \frac{W + \sigma_s \times Y}{\sigma_p} - Y_0 \times \left( e^{\frac{W + \sigma_s \times Y}{M}} - 1 \right)$$

Où Y est le courant, W la tension selon le modèle et M une constante dépendante du nombre de cellules photovoltaïques de l'élément de l'installation photovoltaïque sur lequel est appliqué le modèle, de l'idéalité de la diode et de la température des cellules photovoltaïques.

Il est à noter qu'il est possible de déduire un modèle équivalent à celui formulé par l'équation [MATH 1] qui exprime la tension W en fonction du courant Y et de la tension W.

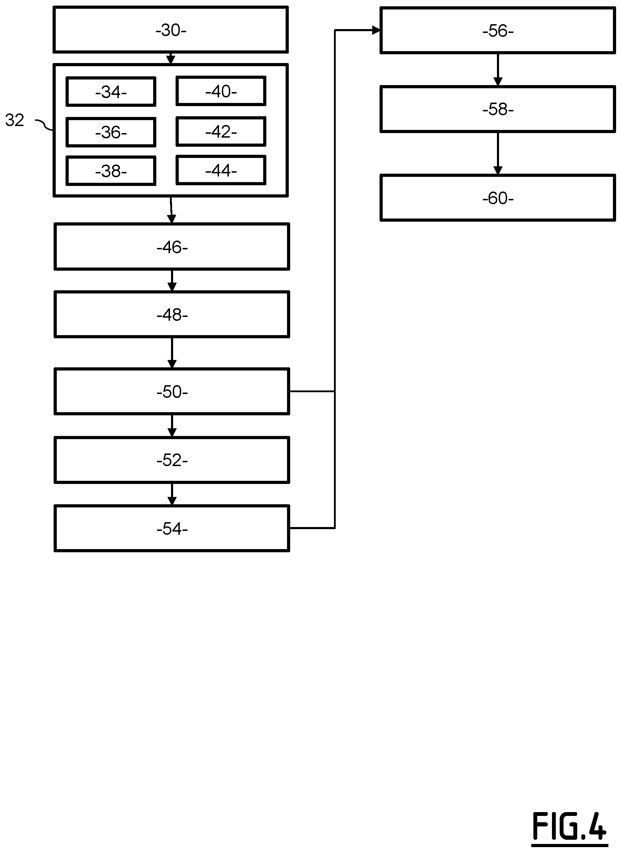

La figure 4 est un ordinogramme des principales étapes d'un procédé de diagnostic de fonctionnement d'une chaîne de modules photovoltaïques comprenant au moins un module photovoltaïque selon un mode de réalisation.

Ce procédé est mis en oeuvre automatiquement par un processeur de calcul d'un dispositif 24 de diagnostic de fonctionnement qui est un dispositif électronique programmable.

Ce procédé comporte une étape 30 d'acquisition d'une série de mesures de courant et de tension mesurées durant une période de surveillance de la chaîne comprenant au moins un module photovoltaïque.

Dans un mode de réalisation, lors de l'étape 30 des couples de valeurs de courant et de tension $(I_j, V_j)$ mesurées sont reçues, la mesure effective étant effectuée par un module 22 qui transmet ces valeurs au dispositif 24 de diagnostic de fonctionnement. Ces valeurs de mesure forment une courbe I(V) (courbe de courant en fonction de la tension) de la chaîne de modules photovoltaïques surveillée.

L'acquisition des mesures est effectuée après déconnexion d'au moins un module photovoltaïque surveillé de l'installation, pendant la période de surveillance.

La période de surveillance est d'une durée de l'ordre de quelques millisecondes (typiquement entre 5 et 100 millisecondes).

De préférence, la durée de la période de surveillance est choisie pour optimiser le tracé de la courbe I(V) en fonction de l'irradiance lorsqu'une mesure de l'irradiance est disponible.

Alternativement, la période de surveillance est démarrée à partir de la détection de la valeur de courant $I_{mpp}$ au point maximal de puissance.

Dans un mode de réalisation, pour chacun des cas, une table de durées de périodes de surveillance, préalablement enregistrée, en fonction des composants électroniques du ou des module(s) photovoltaïques surveillés, indique une durée de surveillance. Ainsi, l'acquisition des mesures pour tracer la courbe I(V) est optimisée.

En variante, la courbe I(V) de l'au moins un module photovoltaïque est mémorisée, puis extraite d'une mémoire du dispositif 24 de diagnostic de fonctionnement.

Le procédé comporte ensuite une étape 32 d'estimation d'une valeur de courant de court-circuit $I_{sc}$ et d'une valeur de tension en circuit ouvert $V_{oc}$ à partir des valeurs de courant et de tension acquises à l'étape 30.

En pratique, les valeurs $I_{sc}$ et $V_{oc}$ sont difficiles à déterminer avec précision car de nombreux points de mesure sont acquis lorsque l'au moins un module photovoltaïque surveillé est dans les zones de fonctionnement correspondantes. Les mesures acquises sont bruitées.

Selon un mode de réalisation, l'étape 32 comporte des sous-étapes, respectivement, pour l'estimation du courant de court-circuit $I_{sc}$ :

- une sous-étape 34 de calcul d'une caractéristique de puissance P(V) en fonction de la tension, à partir de mesures de courant et de tension, et
- une sous-étape 36 de modélisation de la caractéristique de puissance en fonction de la tension P(V) par un modèle p(V), dit premier modèle de puissance, qui est un modèle linéaire ou polynomial.

Ensuite, le courant de court-circuit $I_{sc}$ est estimé lors de la sous-étape 38 par la dérivée en zéro du premier modèle de puissance p(V) :

[MATH 2]

$$I_{sc} = \frac{dp(V)}{dV}(V = 0)$$

L'étape 32 comporte également, pour l'estimation de la tension en circuit ouvert, des sous-étapes suivantes :

- sous-étape 40 de calcul d'une caractéristique de puissance P(I) en fonction du courant, à partir des mesures de courant et de tension en fonction du courant,
- sous-étape 42 de modélisation de la caractéristique de puissance en fonction du courant P(I) par un modèle p(I) linéaire ou polynomial, dit deuxième modèle de puissance.

Ensuite, la tension en circuit ouvert $V_{oc}$ est estimée lors de la sous-étape 44 par la dérivée en zéro du deuxième modèle de puissance p(I):

[MATH 3]

$$V_{oc} = \frac{dp(I)}{dI}(I = 0)$$

Selon une variante, les étapes 34 et 40 sont fusionnées, un calcul de puissance $P_j$ étant effectué pour chaque couple de mesures $(I_j, P_j)$ par $P_j = I_j \times V_j$, et les modélisations respectives par le premier modèle de la puissance en fonction de la tension p(V) et le deuxième modèle de la puissance en fonction du courant p(I) sont effectuées ensuite.

Selon une autre variante, le calcul de puissance est effectué à la volée, seules les modélisations respectives de la puissance en fonction de la tension (ou premier modèle de puissance) et de la puissance en fonction du courant (ou deuxième modèle de puissance) étant effectuées.

De préférence, les modélisations respectives de la puissance sont effectuées pour un sous-ensemble de mesures $(I_j, V_j)$, respectivement pour des instants temporels dans une première zone linéaire de la caractéristique de puissance en fonction de la tension, proche de $I_{sc}$, d'une part, et pour des instants temporels dans une deuxième zone linéaire de la caractéristique de puissance en fonction du courant, proche de $V_{oc}$, d'autre part.

On entend ici par zone linéaire (ou zone de linéarité) une zone dans laquelle les points de mesure suivent un tracé sensiblement linéaire.

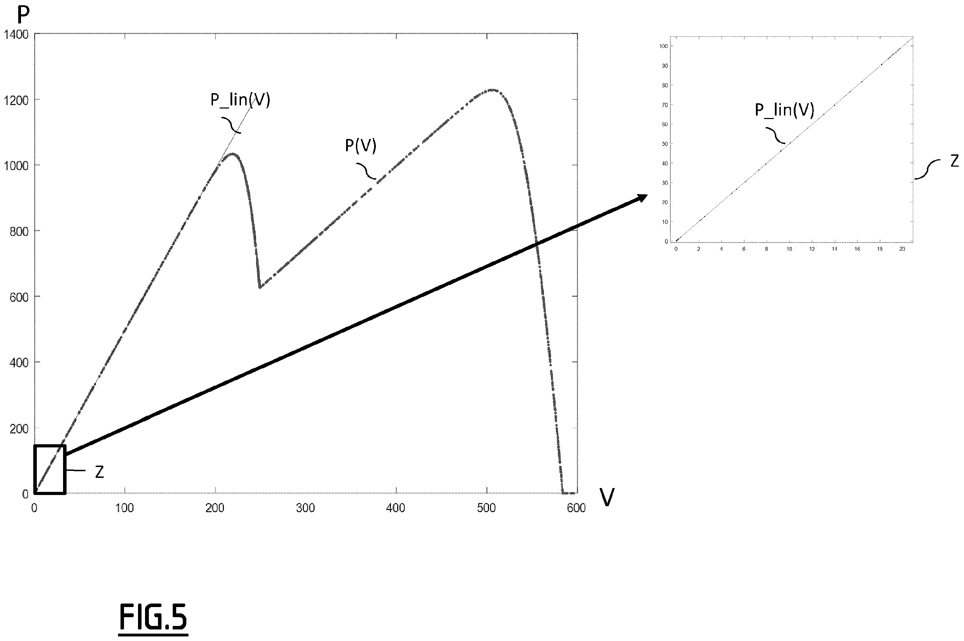

La figure 5 montre une caractéristique de puissance en fonction de la tension, P(V), calculée sur l'ensemble des mesures, la puissance étant représentée sur l'axe des ordonnées et la tension sur l'axe des abscisses, une zone Z linéaire, proche de $I_{sc}$, dans laquelle la caractéristique de puissance est linéaire et une modélisation linéaire P_lin(V) à partir d'un sous-ensemble des points calculés. Le détail de la zone Z de fonctionnement proche de $I_{sc}$, dans laquelle la caractéristique de puissance est linéaire est illustré sur la partie droite de la figure.

Avantageusement, la modélisation de la puissance en fonction de la tension et/ou en fonction du courant permet une estimation plus robuste au bruit qu'une estimation par une modélisation directe du courant en fonction de la tension dans la zone de fonctionnement proche de $I_{sc}$, ou par une modélisation directe de la tension en fonction du courant dans la zone de fonctionnement proche de $V_{oc}$.

Le procédé comporte en outre une étape 46 de mise en oeuvre d'une transformation en coordonnées polaires du courant et de la tension normalisées par les valeurs de $I_{sc}$ et de $V_{oc}$ respectivement, de manière à obtenir un rayon égal à 1 aux points extrêmes de la courbe en coordonnées polaires correspondant à la courbe I(V). En d'autres termes, après application de la transformation en coordonnées polaires normalisée, pour des valeurs d'angle φ de 0 et de π/2, le rayon est égal à 1.

Ainsi, un couple de valeurs de courant $I_j$ et de tension $V_j$ mesurées est transformé en couple de valeur de rayon $\rho_j$ et d'angle $\varphi_j$ correspondant, la transformation en coordonnées polaires mettant en oeuvre le calcul suivant :

[MATH 4]

$$\rho_j = \sqrt{\left(\frac{I_j}{I_{sc}}\right)^2 + \left(\frac{V_j}{V_{oc}}\right)^2} \text{ et } \varphi_j = arctan\left(\frac{I_j \times V_{oc}}{V_j \times I_{sc}}\right)$$

Avantageusement, la transformation en coordonnées polaires permet de mieux modéliser les mesures acquises, par un premier modèle du type modèle électrique à une diode tel que décrit ci-dessus, et par un deuxième modèle avec dérivation (ou avec inflexion).

En effet, dans le repère courant tension (coordonnées cartésiennes de la courbe I(V)), pour un modèle d'approximation de type modèle électrique à une diode, la présence de composantes linéaire et exponentielle du modèle rend l'évaluation de la distance entre le modèle et les points de mesure par une distance classique (e.g. distance euclidienne) inadéquate, car un écart équivalent sur la tension (par exemple) peut engendrer un impact très différent sur la distance en fonction de sa localisation sur la courbe.

Le procédé comprend en outre une étape 48 de calcul des paramètres d'un premier modèle électrique d'approximation de courbe I(V), et une étape 50 de calcul d'un premier coût représentatif d'un écart entre ce premier modèle et la courbe I(V), en mettant en oeuvre une métrique de distance (également appelée simplement métrique) dans l'espace de coordonnées polaires.

Par exemple, la métrique de distance appliquée est la distance euclidienne, i.e. la somme quadratique des différences entre les valeurs $(\rho_j, \varphi_j)$ et les points correspondants du premier modèle d'approximation dans l'espace des coordonnées polaire.

Bien entendu, toute métrique de distance peut être utilisée, par exemple la distance $L_1$ (somme des valeurs absolues des différences) ou une distance en corrélation de Pearson par exemple.

Dans un mode de réalisation préféré, le premier modèle électrique d'approximation est le modèle électrique à une diode décrit en référence à la figure 3, dont les paramètres sont optimisés pour représenter au mieux, selon la métrique choisie, les points de mesure formant la courbe I(V).

L'optimisation est effectuée en coordonnées polaires comme détaillé ci-dessous.

En coordonnées polaires, le modèle électrique à une diode de la formule [MATH 1] est décrit par la formule suivante :

[MATH 5]

$$I_{ph} + I_0 - \rho(\varphi) \times \frac{\cos(\varphi) + (R_s + R_p) \times \sin(\varphi)}{R_p} - I_0 \times e^{\rho(\varphi) \times \frac{\cos(\varphi) + R_s \times \sin(\varphi)}{N}} = 0$$

Où $\rho(\varphi)$ est le rayon correspondant à l'angle $\varphi$ selon le premier modèle d'approximation.

Les paramètres du modèle de l'équation [MATH 5] sont liés aux paramètres du modèle défini par [MATH 1] de la manière suivante :

- 

$$I = \frac{Y}{I_{sc}} \; ; V = \frac{W}{V_{oc}}$$

- 

$$I_{ph} = \frac{Y_{sc}}{I_{sc}} \; ; I_0 = \frac{Y_0}{I_{sc}}$$

- 

$$R_p = \sigma_p \times \frac{I_{sc}}{V_{oc}}$$

- 

$$R_s = \sigma_s \times \frac{I_{sc}}{V_{oc}}$$

- 

$$N = \frac{M}{V_{oc}}$$

Du fait de la normalisation appliquée, de plus, la relation suivante est vérifiée :

$$\rho(0) = \rho\left(\frac{\pi}{2}\right) = 1$$

Les paramètres de photo-courant $I_{ph}$ et de courant d'obscurité $I_0$ sont calculables par les formules :

[MATH 6]

$$I_{ph} = \frac{e^{\frac{1}{N}} - e^{\frac{R_s}{N}} + (R_s + R_p - 1) \times \left(e^{\frac{1}{N}} - 1\right)}{R_p \times \left(e^{\frac{1}{N}} - e^{\frac{R_s}{N}}\right)}$$

[MATH 7]

$$I_0 = \frac{R_s + R_p - 1}{R_p \times \left(e^{\frac{1}{N}} - e^{\frac{R_s}{N}}\right)}$$

Par conséquent, les valeurs des paramètres de photo-courant $I_{ph}$ et de courant d'obscurité $I_0$ sont dépendantes de $R_p$, $R_s$ et N.

Lors de l'étape 48 de calcul des paramètres d'un premier modèle électrique d'approximation de courbe I(V), dans l'espace des coordonnées polaires, les valeurs des paramètres calculées sont les valeurs de $R_p$, $R_s$ et N qui permettent de minimiser la distance, selon la métrique choisie, entre les points fournis par le premier modèle et les mesures de courant -tension représentées en coordonnées polaires.

Dans un mode de réalisation, donné ici à titre d'exemple non exhaustif, $R_s$ est compris dans l'intervalle [0,01 - 0,95], et est initialisé à 0,01, $R_p$ est compris dans l'intervalle [1,05 - 100] et est initialisé à 100, N est compris dans l'intervalle [0,01 - 0,3] et est initialisé à 0,01.

Après initialisation, une phase d'optimisation de l'estimation des valeurs des paramètres, en fonction de la distance selon la métrique choisie est mise en oeuvre.

Par exemple, un algorithme d'optimisation par descente de gradient est utilisé, avec un nombre d'itérations choisi et une fonction objectif qui minimise, à chaque itération, la distance en coordonnées polaires entre le premier modèle électrique d'approximation de la courbe I(V) défini par les paramètres estimés à cette itération et les mesures de courant et de tension de la courbe I(V).

Le premier coût représentatif d'un écart entre le premier modèle et la courbe I(V) (en coordonnées polaires), obtenu à l'étape de calcul 50, est égal à la distance, après optimisation des paramètres du modèle (en d'autres termes, la distance minimale), selon la métrique choisie, entre le premier modèle électrique et les points de la courbe I(V).

Lorsque la métrique choisie est la somme quadratique des différences dans l'espace des coordonnées polaires, le premier écart entre le premier modèle d'approximation $\rho_{mod1}(\varphi)$ et l'ensemble des points de mesures $(\rho_j, \varphi_j)$ comportant J points, s'écrit :

[MATH 8]

$$D_1 = \sum_{j=1}^{J} \left(\rho_{mod1}(\varphi_j) - \rho_j\right)^2$$

Le procédé comporte également des étapes 52 de calcul des paramètres d'un deuxième modèle électrique d'approximation de la courbe I(V), et une étape 54 de calcul d'un deuxième coût représentatif d'un écart entre le deuxième modèle et la courbe I(V), en mettant en oeuvre la métrique de distance dans l'espace de coordonnées polaires.

Le deuxième modèle d'approximation de la courbe I(V) est, dans un mode de réalisation, un modèle électrique à une diode comportant une inflexion, également appelé modèle « avec dérivation ».

Par exemple, un tel modèle est adéquat lorsque le module ou la chaîne de modules photovoltaïque(s) surveillé subit un ombrage partiel, ce qui induit une diminution de la production de courant électrique dans la partie ombragée. Ce type de phénomène se rencontre de même dans n'importe quelle situation où une partie de la chaine isolée par des diodes de by-pass fonctionne de façon sous-optimale par rapport au reste de la chaine (modules partiellement défaillant, salissure non homogène, etc...). Par la suite, on parlera de présence de disparité (ou « mismatch » en anglais).

Dans une installation photovoltaïque 2 telle que représenté à la figure 1, des diodes de « by-pass » sont mises en action en cas d'ombrage ou autre défaut pour déconnecter la partie ombragée et éviter qu'elle ne consomme l'énergie électrique produite par le reste de l'installation.

Un tel modèle à une inflexion est caractérisé par des paramètres $A_d$ et $A_l$ où $A_d$ est représentatif du pourcentage de diodes de « by-pass » actionnées, et $A_l$ représente la perte de courant en court-circuit induite sur le sous-ensemble de cellules photovoltaïques déconnectées par les diodes de by-pass.

Le deuxième modèle d'approximation de la courbe I(V) est obtenu à partir d'un premier modèle d'approximation, qui est dans un mode de réalisation le modèle électrique à une diode sans dérivation.

Considérant une formulation d'un modèle électrique à une diode exprimant la tension en fonction du courant, noté ici $W_{th}(Y)$ et appelé modèle à une diode théorique, le deuxième modèle d'approximation peut être formulée par :

[MATH 9]

$$W_{mod2}(Y) = (1 - A_d) \times W_{th}(Y) + A_d \times W_{th}\left(\frac{Y}{1 - A_l}\right)$$

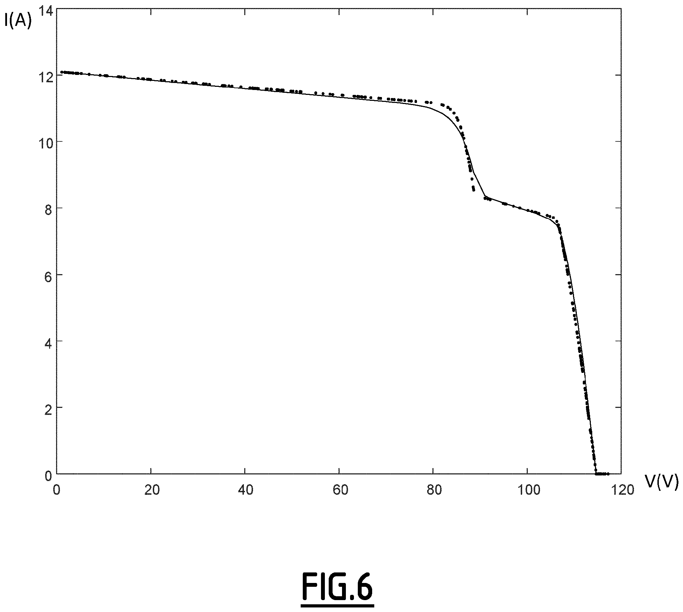

La figure 6 illustre un exemple de points d'une courbe I(V) dans le repère cartésien courant/tension dans le cas de présence d'une disparité, et un deuxième modèle électrique d'estimation de la courbe I(V) associé. Le courant est en Ampères, et la tension en Volts.

Les points de mesure (courbe I(V)) sont représentés par des points, et le deuxième modèle électrique d'estimation de la courbe I(V) est représenté en trait plein. On constate sur la figure la présence d'une inflexion.

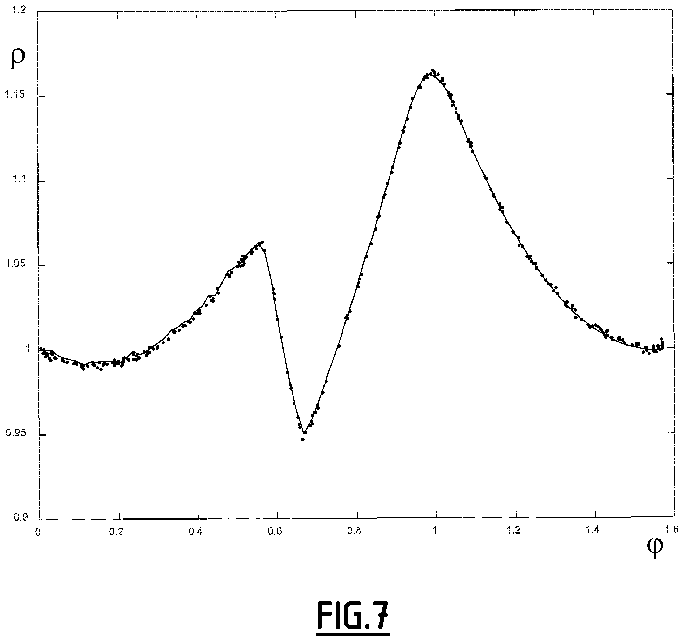

La figure 7 illustre un exemple de courbe I(V) avec inflexion ramenée dans le repère ($\rho$,$\varphi$) des coordonnées polaires, après transformation en coordonnées polaires appliquée sur chaque point de la courbe I(V), et application de la normalisation de manière à ce que les valeurs du rayon en 0 et en $\pi$/2 soit égales à 1.

Lors de l'étape 52, l'estimation des valeurs des paramètres du modèle électrique à une diode théorique $W_{th}$ est faite de préférence à partir d'une enveloppe convexe formée à partir des points de la courbe I(V), et l'estimation des paramètres $A_d$, $A_l$ caractérisant l'inflexion est effectuée dans l'espace des mesures courant/tension, de manière rendre l'estimation des paramètres initiaux plus robuste.

Dans un mode de réalisation, l'enveloppe convexe des points de la courbe I(V) est calculée par toute méthode connue à cet effet, par exemple par l'algorithme de Jarvis qui est connu pour calculer l'enveloppe convexe d'un ensemble fini de points.

Par exemple, l'algorithme est initialisé sur le point de tension maximum (tension $V_{OC}$). Ensuite, l'interpolation linéaire est testée avec tous les points jusqu'à ce que le point de courant maximum (courant $I_{SC}$) soit sélectionné.

Dans un mode de réalisation, pour tous les points considérés, la tension tous les points qui ont une tension supérieure à $V_{oc}$ sont ramenés à $V_{oc}$ et tous les points qui ont un courant supérieur à $I_{sc}$ sont limités à $I_{sc}$.

Bien entendu, toute autre méthode alternative de calcul de l'enveloppe convexe est applicable.

Le calcul des paramètres du modèle électrique à une diode $W_{th}$ est effectué de manière analogue à ce qui a été décrit en référence à l'étape 48, avec une optimisation des paramètres du modèle en fonction de la distance calculée dans le repère des coordonnées polaires.

Ensuite, la détermination des valeurs de $A_d$ et $A_l$ se fait en coordonnées cartésiennes (représentation du courant en fonction de la tension), en utilisant le deuxième modèle exprimé par la formule [MATH 9].

Ensuite, le deuxième coût associé au deuxième modèle d'approximation est calculé (étape 54) en coordonnées polaires, afin de produire une estimation de coût cohérente et comparable au premier coût calculé pour le premier modèle d'approximation.

A l'issue de l'étape 54 on obtient le deuxième coût $D_2$ représentatif de l'écart entre le deuxième modèle d'approximation $\rho_{mod2}(\varphi)$ et l'ensemble des points de mesures ($\rho_i$, $\varphi_i$) comportant J points, selon la métrique choisie :

[MATH 10]

$$D_2 = \sum_{j=1}^{J} \left(\rho_{mod2}(\varphi_j) - \rho_j\right)^2$$

Le procédé comporte ensuite une étape 56 sélection d'un modèle électrique d'estimation de la courbe I(V) parmi le premier modèle électrique d'approximation et le deuxième modèle électrique d'approximation en fonction des premier et deuxième coûts.

Dans un mode de réalisation, les coûts D1 et D2 sont comparés, et le modèle électrique d'approximation retenu est celui correspondant au coût le plus faible.

Enfin, le procédé comporte une étape 58 de diagnostic de fonctionnement, et de caractérisation, le cas échéant, d'un défaut ou d'une anomalie dans le fonctionnement, fonction des paramètres du modèle d'estimation sélectionné.

Si le modèle d'estimation sélectionné est le premier modèle d'approximation, les paramètres du modèle sont analysés par rapport à des valeurs attendues des paramètres du modèle, qui sont par exemple mémorisés dans une table de valeurs nominales de paramètres.

Par exemple, les valeurs attendues des paramètres nominaux sont définies par rapport à des conditions de température et de rayonnement, et/ou sont fournies par le constructeur ou sont calculées sur un historique de fonctionnement.

Dans un mode de réalisation, si certaines valeurs de paramètres du modèle d'estimation sélectionné s'écartent d'une valeur supérieure à un seuil donné des valeurs des paramètres nominaux correspondants, une anomalie est détectée. Par exemple, si la résistance série $R_s$ estimée est plus élevée d'une quantité X donnée par rapport à sa valeur attendue, X étant par exemple compris entre 1/3 et 2/3 d'une valeur moyenne « nominale », un vieillissement des connectiques est détecté.

Des exemples non exhaustifs de diagnostic en fonction des valeurs des paramètres du modèle d'estimation sélectionné sont donnés ci-après.

La baisse de $I_{sc}$ pour une irradiance donnée indique par exemple la présence de salissures ou de jaunissement de l'encapsulant des modules photovoltaïques, l'encapsulation des cellules photovoltaïques étant un procédé connu de protection des cellules d'un module photovoltaïque.

La baisse de $V_{oc}$ révélée une défaillance d'un certain nombre de diodes de « by-pass ».

La baisse de $R_p$ et/ou l'augmentation de N signale des défaillances au niveau des cellules.

La dégradation simultanée de $R_s$, $R_p$, et N est généralement signe de dégradation induite du potentiel, couramment désignée par le sigle PID (pour « Potential Induced Dégradation »), phénomène connu provoquant une perte de rendement des cellules photovoltaïques.

Si le modèle d'estimation sélectionné est le deuxième modèle d'approximation, la présence d'un défaut induisant une disparité (ou « mismatch ») est détectée. Les paramètres $A_d$ et $A_l$ calculés permettent de quantifier la proportion de la chaine touchée par une baisse de production et la proportion de baisse sur cette sous-partie.

Le procédé comporte également une étape 60 d'affichage du diagnostic. Par exemple, l'affichage consiste à allumer un voyant lumineux formant une interface homme-machine, indiquant par sa couleur

- si le fonctionnement est normal, par exemple par un affichage de voyant en vert,
- si une maintenance est à effectuer, par exemple par un affichage de voyant en jaune ou
- si un dysfonctionnement est constaté, par exemple par un affichage de voyant en rouge.

En complément, si le dispositif de diagnostic de fonctionnement comporte un écran d'affichage, des détails des caractéristiques des défauts de fonctionnement constatés sont affichées. En particulier, le procédé peut proposer et afficher une estimation chiffrée de la perte de production associée et fournir une hypothèse sur la nature du problème rencontré.

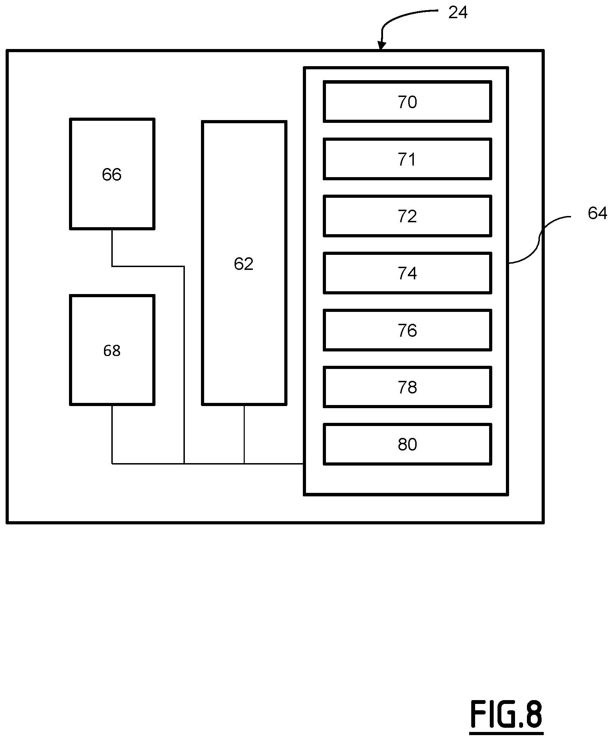

La figure 8 est un schéma bloc d'un dispositif de diagnostic de fonctionnement 24 selon un mode de réalisation.

Le dispositif de diagnostic de fonctionnement 24 est un dispositif électronique programmable, comportant une unité électronique de calcul 62, composée d'un ou plusieurs processeur(s) de calcul. Le dispositif 24 comporte également une unité de mémoire électronique 64, et une interface homme-machine 66. L'interface homme-machine comporte par exemple un voyant lumineux, et/ou un écran d'affichage. Optionnellement, le dispositif 24 comporte en outre une interface de communication 68. L'interface de communication est par exemple une interface de communication permettant une communication radio avec des équipements distants, selon un protocole de communication radio, par exemple WiFi, Bluetooth.

Les éléments 62, 64, 66, 68 sont adaptés à communiquer entre eux via un bus de communication de données.

Le processeur de calcul 62 est configuré pour exécuter des modules réalisés sous forme d'instructions logicielles pour mettre en oeuvre un procédé de diagnostic de fonctionnement d'une chaîne de modules photovoltaïques comprenant au moins un module photovoltaïque selon l'invention.

Ces modules comprennent :

- un module 70 acquisition d'une série de mesures de courant et de tension mesurées durant une période de surveillance dudit au moins un module photovoltaïque, formant une courbe de courant en fonction de la tension ;
- un module 71 d'estimation d'une valeur de courant de court-circuit $I_{sc}$ et d'une valeur de tension en circuit ouvert $V_{oc}$ à partir des valeurs de courant et de tension acquises, ;
- un module 72 de transformation en coordonnées polaires, chaque couple de valeurs de courant et de tension de la courbe I(V) étant transformé en un couple rayon-angle correspondant ;

- un module 74 de calcul des paramètres d'un premier modèle électrique d'approximation de la courbe I(V), et d'un premier coût représentatif d'un écart entre le premier modèle et la courbe I(V), en mettant en oeuvre une métrique de distance dans l'espace de coordonnées polaires;
- un module 76 de calcul des paramètres d'un deuxième modèle électrique d'approximation de ladite courbe I(V), et d'un deuxième coût représentatif d'un écart entre le deuxième modèle et la courbe I(V), en mettant en oeuvre la métrique de distance dans l'espace des coordonnées ;
- un module 78 sélection d'un modèle électrique d'estimation de la courbe I(V) parmi le premier modèle électrique d'approximation et le deuxième modèle électrique d'approximation en fonction des premier et deuxième coûts ;
- un module 80 de diagnostic de fonctionnement en fonction de la valeur d'au moins un paramètre du modèle électrique d'estimation sélectionné.

Dans un mode de réalisation, les modules 70, 71, 72, 74, 76, 78 et 80 sont réalisés sous forme d'instructions logicielles formant un programme d'ordinateur, qui, lorsqu'il est exécuté par un dispositif électronique programmable, met en oeuvre un procédé de diagnostic de fonctionnement d'une chaîne de modules photovoltaïques comprenant au moins un module photovoltaïque selon l'invention.

En variante non représentée, les modules 70, 71, 72, 74, 76, 78 et 80 sont réalisés chacun sous forme de composants logiques programmables, tels que des FPGA (de l'anglais *Field Programmable Gate Array),* des microprocesseurs, des composants GPGPU (de l'anglais *General-purpose processing on graphies processing),* ou encore de circuits intégrés dédiés, tels que des ASIC (de l'anglais *Application Spécifie Integrated Circuit).*

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

## Revendications

1. Procédé de diagnostic de fonctionnement d'une chaîne de modules photovoltaïques comprenant au moins un module photovoltaïque, le procédé comportant une acquisition d'une série de mesures de courant et de tension mesurées durant une période de surveillance, formant une courbe de courant en fonction de la tension, dite courbe I(V), le procédé étant **caractérisé en ce qu'**il comporte des étapes, mises en oeuvre par un processeur de calcul, de :

   - transformation (46) en coordonnées polaires, chaque couple de valeurs de courant et de tension de la courbe I(V) étant transformé en un couple rayon-angle correspondant,
   - calcul (48, 50) de paramètres d'un premier modèle électrique d'approximation de ladite courbe I(V), et d'un premier coût représentatif d'un écart entre ledit premier modèle et ladite courbe I(V), en mettant en oeuvre une métrique de distance dans l'espace de coordonnées polaires,
   - calcul (52, 54) de paramètres d'un deuxième modèle électrique d'approximation de ladite courbe I(V), et d'un deuxième coût représentatif d'un écart entre ledit deuxième modèle et ladite courbe I(V), en mettant en oeuvre ladite métrique de distance dans l'espace des coordonnées polaires,
   - sélection (56) d'un modèle électrique d'estimation de la courbe I(V) parmi lesdits premier modèle électrique d'approximation et deuxième modèle électrique d'approximation en fonction des premier et deuxième coûts,
   - diagnostic (58) de fonctionnement en fonction de la valeur d'au moins un paramètre du modèle électrique d'estimation sélectionné.

2. Procédé selon la revendication 1, comportant en outre une étape (32) d'estimation d'une valeur de courant de court-circuit ($I_{SC}$) et d'une valeur de tension en circuit ouvert ($V_{oc}$) avant la transformation en coordonnées polaires, correspondant respectivement à des points extrêmes de la courbe I(V), qui sont respectivement un premier point de tension nulle et de courant égal à la valeur de courant de court-circuit ($I_{SC}$), et un deuxième point de tension égale à la valeur de tension en circuit ouvert ($V_{oc}$) et à un courant nul, et dans lequel la transformation (46) en coordonnées polaires est normalisée par lesdites valeurs de courant de court-circuit ($I_{SC}$) et de tension en circuit ouvert ($V_{oc}$).

3. Procédé selon la revendication 2, dans lequel la transformation (46) en coordonnées polaires normalisée comprend, pour chaque couple de valeurs de courant et de tension une division de la valeur de courant par ladite valeur de courant de court-circuit ($I_{SC}$), et de la valeur de tension par ladite valeur de tension en circuit ouvert ($V_{oc}$).

4. Procédé selon la revendication 3, dans lequel pour un couple de valeurs de courant $I_j$ et de tension $V_j$ mesurées, la transformation en coordonnées polaires met en oeuvre le calcul suivant pour obtenir un rayon $\rho_j$ et un angle $\varphi_j$ correspondant :

$$\rho_j = \sqrt{\left(\frac{I_j}{I_{sc}}\right)^2 + \left(\frac{V_j}{V_{oc}}\right)^2} \text{ et } \varphi_j = Arctan\left(\frac{I_j \times V_{oc}}{V_j \times I_{sc}}\right)$$

5. Procédé selon l'une quelconque des revendications 2 à 4, dans lequel l'estimation (32) d'une valeur de courant de court-circuit comporte :

   - un calcul (34) d'une caractéristique de puissance en fonction de la tension, à partir des mesures de courant et de tension,
   - une modélisation (36), dans une première zone linéaire de la caractéristique de puissance en fonction de la tension, de la caractéristique de puissance en fonction de la tension par un premier modèle de puissance, linéaire ou polynomial, la valeur de courant de court-circuit étant estimée (38) par la dérivée en zéro dudit premier modèle de puissance.

6. Procédé selon l'une quelconque des revendications 2 à 5, dans lequel l'estimation d'une valeur de tension en circuit ouvert comporte :

   - un calcul (40) d'une caractéristique de puissance en fonction du courant à partir des mesures de courant et de tension,
   - une modélisation (42), dans une deuxième zone linéaire de la caractéristique de puissance en fonction de la tension, de la caractéristique de puissance en fonction du courant par un deuxième modèle de puissance, linéaire ou polynomial, la valeur de tension en circuit ouvert étant estimée (44) par la dérivée en zéro dudit deuxième modèle de puissance.

7. Procédé selon l'une quelconque des revendications 1 à 6, dans lequel le premier modèle électrique d'approximation de ladite courbe I(V), est un modèle électrique dit à une diode, défini par l'équation suivante dans l'espace de coordonnées polaires :

$$I_{ph} + I_0 - \rho(\varphi) \times \frac{\cos(\varphi) + \left(R_s + R_p\right) \times \sin(\varphi)}{R_p} - I_0 \times e^{\rho(\varphi) \times \frac{\cos(\varphi) + R_s \times \sin(\varphi)}{N}} = 0$$

   Où $\rho(\varphi)$ est le rayon correspondant à l'angle $\varphi$ selon le premier modèle d'approximation, $I_{ph}$, $I_0$, $R_s$, $R_p$ et N sont des paramètres dudit premier modèle électrique.

8. Procédé selon l'une quelconque des revendications 1 à 7, comportant en outre une détermination d'une durée de la période de surveillance pour l'acquisition des mesures de courant et de tension, en fonction d'une table de durées de périodes de surveillance préalablement enregistrée et dépendant de caractéristiques physiques de la chaîne de modules photovoltaïques comprenant au moins un module photovoltaïque à surveiller.

9. Procédé selon l'une quelconque des revendications 1 à 8, comportant en outre un affichage (60) d'un résultat de diagnostic sur une interface homme-machine, indiquant un état de bon fonctionnement ou une présence d'une anomalie dans le fonctionnement dudit au moins un module photovoltaïque.

10. Dispositif de diagnostic de fonctionnement d'une chaîne de modules photovoltaïques comprenant au moins un module photovoltaïque, adapté pour obtenir, d'un module d'acquisition, une série de mesures de courant et de tension mesurées durant une période de surveillance, formant une courbe de courant en fonction de la tension, dite courbe I(V), le dispositif étant **caractérisé en ce qu'**il comporte un processeur de calcul configuré pour mettre en oeuvre :

   - un module (72) de transformation en coordonnées polaires, chaque couple de valeurs de courant et de tension de la courbe I(V) étant transformé en un couple rayon-angle correspondant,
   - un module (74) de calcul de paramètres d'un premier modèle électrique d'approximation de ladite courbe I(V), et d'un premier coût représentatif d'un écart entre ledit premier modèle et ladite courbe I(V), en mettant en oeuvre une métrique de distance dans l'espace de coordonnées polaires,
- un module (76) de calcul de paramètres d'un deuxième modèle électrique d'approximation de ladite courbe I(V), et d'un deuxième coût représentatif d'un écart entre ledit deuxième modèle et ladite courbe I(V), en mettant en oeuvre ladite métrique de distance dans l'espace des coordonnées polaires,
- un module (78) de sélection d'un modèle électrique d'estimation de la courbe I(V) parmi lesdits premier modèle électrique d'approximation et deuxième modèle électrique d'approximation en fonction des premier et deuxième coûts,
- un module (80) de diagnostic de fonctionnement en fonction de la valeur d'au moins un paramètre du modèle électrique d'estimation sélectionné.

**11.** Dispositif selon la revendication 10, comportant en outre un module (71) d'estimation d'une valeur de courant de court-circuit $I_{sc}$ et d'une valeur de tension en circuit ouvert $V_{oc}$ à partir des valeurs de courant et de tension acquises.

**12.** Système de diagnostic de fonctionnement d'une chaîne de modules photovoltaïques comprenant au moins un module photovoltaïque, comportant un module (22) d'acquisition de valeurs d'une série de mesures de courant et de tension mesurées durant une période de surveillance d'au moins un module photovoltaïque de ladite chaîne de modules photovoltaïques, et un dispositif de diagnostic de fonctionnement selon les revendications 10 ou 11.

**13.** Programme d'ordinateur comportant des instructions comportant des instructions logicielles qui, lorsqu'elles sont exécutées par un dispositif électronique programmable, mettent en oeuvre un procédé de diagnostic de fonctionnement d'une chaîne de modules photovoltaïques comprenant au moins un module photovoltaïque conforme aux revendications 1 à 9.

**Patentansprüche**

**1.** Verfahren zur Diagnose des Betriebs eines Strangs von Photovoltaikmodulen, umfassend mindestens ein Photovoltaikmodul, das Verfahren umfassend eine Erfassung einer Reihe von Strom- und Spannungsmessungen, die während einer Überwachungsperiode gemessen werden und eine Kurve des Stroms abhängig von der Spannung, die sogenannte Kurve I(V), bilden, wobei das Verfahren **dadurch gekennzeichnet ist, dass** es Schritte umfasst, die von einem Rechenprozessor ausgeführt werden, zur:

- Transformation (46) in Polarkoordinaten, wobei jedes Paar von Strom- und Spannungswerten der Kurve I(V) in ein entsprechendes Radius-Winkel-Paar umgewandelt wird,
- Berechnung (48, 50) von Parametern eines ersten elektrischen Modells zur Näherung an die Kurve I(V) und von ersten Kosten, die repräsentativ für eine Abweichung zwischen dem ersten Modell und der Kurve I(V) sind, durch Implementieren einer Distanzmetrik in dem Polarkoordinatenraum,
- Berechnung (52, 54) von Parametern eines zweiten elektrischen Modells zur Näherung an die Kurve I(V) und von zweiten Kosten, die repräsentativ für eine Abweichung zwischen dem zweiten Modell und der Kurve I(V) sind, durch Implementieren der Distanzmetrik in dem Polarkoordinatenraum,
- Auswahl (56) eines elektrischen Modells zum Schätzen der Kurve I(V) aus dem ersten elektrischen Näherungsmodell und dem zweiten elektrischen Näherungsmodell abhängig von den ersten und zweiten Kosten,
- Diagnose (58) des Betriebs abhängig von dem Wert von mindestens einem Parameter des ausgewählten elektrischen Schätzmodells.

**2.** Verfahren nach Anspruch 1, ferner umfassend einen Schritt (32) zur Schätzung eines Kurzschlussstromwerts ($I_{sc}$) und eines Leerlaufspannungswerts ($V_{oc}$) vor der Transformation in Polarkoordinaten, die jeweils den Endpunkten der Kurve I(V) entsprechen, die jeweils ein erster Punkt mit Nullspannung und einem Strom gleich wie der Kurzschlussstromwert ($I_{sc}$) und ein zweiter Punkt mit einer Spannung gleich wie der Leerlaufspannungswert ($V_{pp}$) und einem Nullstrom sind, und wobei die Polarkoordinatentransformation (46) durch den Kurzschlussstromwert ($I_{sc}$) und den Leerlaufspannungswert ($V_{oc}$) normalisiert wird.

**3.** Verfahren nach Anspruch 2, wobei die normalisierte Polarkoordinatentransformation (46) für jedes Paar von Strom- und Spannungswerten eine Division des Stromwerts durch den Kurzschlussstromwert ($I_{sc}$) und des Spannungswerts durch den Leerlaufspannungswert ($V_{oc}$) umfasst.

**4.** Verfahren nach Anspruch 3, wobei für ein Paar gemessener Stromwerte $I_j$ und Spannungswerte $V_j$ die Transformation in Polarkoordinaten die folgende Berechnung durchgeführt wird, um einen Radius $\rho_j$ zu erlangen und einen ent-

sprechenden Winkel $\varphi_j$ zu erlangen:

$$\rho_j = \sqrt{\left(\frac{I_j}{I_{sc}}\right)^2 + \left(\frac{V_j}{V_{oc}}\right)^2} \text{ und } \varphi_j = Arctan\left(\frac{I_j \times V_{oc}}{V_j \times I_{sc}}\right)$$

**5.** Verfahren nach einem der Ansprüche 2 bis 4, wobei das Schätzen (32) eines Kurzschlussstromwerts Folgendes umfasst:

- Berechnen (34) einer spannungsabhängigen Leistungscharakteristik anhand der Strom- und Spannungsmessungen,
- Modellieren (36), in einem ersten linearen Bereich der Leistungscharakteristik abhängig von der Spannung, der Leistungscharakteristik abhängig von der Spannung durch ein erstes lineares oder polynomiales Leistungsmodell, wobei der Kurzschlussstromwert durch die Nullableitung des ersten Leistungsmodells geschätzt wird (38).

**6.** Verfahren nach einem der Ansprüche 2 bis 5, wobei das Schätzen eines Leerlaufspannungswerts Folgendes umfasst:

- Berechnen (40) einer stromabhängigen Leistungscharakteristik anhand der Strom- und Spannungsmessungen,
- Modellieren (42), in einem zweiten linearen Bereich der Leistungscharakteristik abhängig von der Spannung, der Leistungscharakteristik abhängig von der Spannung durch ein zweites lineares oder polynomiales Leistungsmodell, wobei der Leerlaufspannungswert durch die Nullableitung des zweiten Leistungsmodells geschätzt wird (44).

**7.** Verfahren nach einem der Ansprüche 1 bis 6, wobei das erste elektrische Modell zur Näherung der Kurve I(V), ein sogenanntes elektrisches Ein-Dioden-Modell ist, das durch die folgende Gleichung in dem Polarkoordinatenraum definiert ist:

$$I_{ph} + I_0 - \rho(\varphi) \times \frac{\cos(\varphi) + (R_s + R_p) \times \sin(\varphi)}{R_p} - I_0 \times e^{\rho(\varphi) \times \frac{\cos(\varphi) + R_s \times \sin(\varphi)}{N}} = 0$$

wobei $\rho(\varphi)$ der Radius ist, der dem Winkel $<p$ gemäß dem ersten Näherungsmodell $I_{ph}$, $I_0$, $R_s$, $R_p$ entspricht und N Parameter des ersten elektrischen Modells sind.

**8.** Verfahren nach einem der Ansprüche 1 bis 7, ferner umfassend eine Bestimmung einer Überwachungsperiodendauer für die Erfassung von Strom- und Spannungsmessungen, die von einer zuvor gespeicherten Tabelle von Überwachungsperiodendauern abhängt und von physikalischen Eigenschaften des Strangs von Photovoltaikmodulen, umfassend mindestens ein zu überwachendes Photovoltaikmodul, abhängig ist.

**9.** Verfahren nach einem der Ansprüche 1 bis 8, ferner umfassend eine Anzeige (60) eines Diagnoseresultats an einer Mensch-Maschine-Schnittstelle, das einen ordnungsgemäßen Betriebszustand oder das Vorhandensein einer Anomalie in dem Betrieb des mindestens einen Photovoltaikmoduls angibt.

**10.** Vorrichtung zur Diagnose des Betriebs eines Strangs von Photovoltaikmodulen, umfassend mindestens ein Photovoltaikmodul, die angepasst ist, um von einem Erfassungsmodul eine Reihe von Strom- und Spannungsmessungen zu erlangen, die während einer Überwachungsperiode gemessen werden und eine Kurve des Stroms abhängig von der Spannung, die sogenannte Kurve I(V), bilden, wobei die Vorrichtung **dadurch gekennzeichnet ist, dass** sie einen Rechenprozessor umfasst, der konfiguriert ist, um Folgendes zu implementieren:

- ein Modul (72) zur Transformation in Polarkoordinaten, wobei jedes Paar von Strom- und Spannungswerten der Kurve I(V) in ein entsprechendes Radius-Winkel-Paar umgewandelt wird,
- ein Modul (74) zur Berechnung von Parametern eines ersten elektrischen Modells zur Näherung an die Kurve I(V) und von ersten Kosten, die repräsentativ für eine Abweichung zwischen dem ersten Modell und der Kurve I(V) sind, durch Implementieren einer Distanzmetrik in dem Polarkoordinatenraum,
- ein Modul (76) zur Berechnung von Parametern eines zweiten elektrischen Modells zur Näherung an die Kurve I(V) und von zweiten Kosten, die repräsentativ für eine Abweichung zwischen dem zweiten Modell und der Kurve I(V) sind, durch Implementieren der Distanzmetrik in dem Polarkoordinatenraum,
- ein Modul (78) zur Auswahl eines elektrischen Modells zum Schätzen der Kurve I(V) aus dem ersten elektrischen Näherungsmodell und dem zweiten elektrischen Näherungsmodell abhängig von den ersten und zweiten Kosten,
- ein Modul (80) zur Betriebsdiagnose abhängig von dem Wert von mindestens einem Parameter des ausgewählten elektrischen Schätzmodells.

**11.** Vorrichtung nach Anspruch 10, ferner umfassend ein Modul (71) zum Schätzen eines Kurzschlussstromwerts $I_{sc}$ und eines Leerlaufspannungswerts $V_{oc}$ anhand der erfassten Strom- und Spannungswerte.

**12.** System zur Diagnose des Betriebs eines Strangs von Photovoltaikmodulen, umfassend mindestens ein Photovoltaikmodul, umfassend ein Modul (22) zum Erfassen von Werten einer Reihe von Strom- und Spannungsmessungen, die während einer Überwachungsperiode mindestens eines Photovoltaikmoduls des Strangs von Photovoltaikmodulen gemessen werden, und einer Funktionsdiagnosevorrichtung nach Anspruch 10 oder 11.

**13.** Computerprogramm, umfassend Anweisungen, umfassend Softwareanweisungen, die, wenn sie von einer programmierbaren elektronischen Vorrichtung ausgeführt werden, ein Verfahren zur Diagnose des Betriebs eines Strangs von Photovoltaikmodulen, umfassend mindestens ein Photovoltaikmodul, gemäß den Ansprüchen 1 bis 9 implementieren.

### Claims

**1.** A method for diagnosing the operation of a string of photovoltaic modules comprising at least one photovoltaic module, the method comprising an acquisition of a series of current and voltage measurements measured during a monitoring period, forming a curve of current as a function of voltage, called the I(V) curve, the method being **characterised in that** it comprises the steps, implemented by a computing processor, of:

- transforming (46) into polar coordinates, each pair of current and voltage values of the I(V) curve being transformed into a corresponding radius-angle pair,
- calculating (48, 50) parameters of a first electrical model approximating said I(V) curve, and a first cost representative of a deviation between said first model and said I(V) curve, by implementing a distance metric in polar coordinate space,
- calculating (52, 54) parameters of a second electrical model approximating said I(V) curve, and a second cost representative of a deviation between said second model and said I(V) curve, by implementing a distance metric in polar coordinate space,
- selecting (56) an electrical model for estimating the I(V) curve from said first electrical approximation model and second electrical approximation model according to the first and second costs,
- diagnosing (58) operation as a function of the value of at least one parameter of the selected electrical estimation model.

**2.** The method according to claim 1, further comprising a step (32) of estimating a short-circuit current value ($I_{sc}$) and an open-circuit voltage value ($V_{oc}$) before the transformation into polar coordinates, corresponding respectively to extreme points of the I(V) curve, which are respectively a first point of voltage equal to zero and current equal to the short-circuit current value ($I_{sc}$) and a second point of voltage equal to the open circuit voltage value ($V_{oc}$) and current equal to zero, and wherein the polar coordinate transformation (46) is normalised by said short circuit current ($I_{sc}$) and open circuit voltage ($V_{oc}$) values.

**3.** The method according to claim 2, wherein the transformation (46) into normalized polar coordinates comprises, for each pair of current and voltage values, a division of the current value by said short circuit current value ($I_{sc}$), and of the voltage value by said open circuit voltage value ($V_{oc}$).

**4.** The method according to claim 3, wherein for a pair of measured values of current $I_j$ and voltage $V_j$, the transformation into polar coordinates implements the following calculation to obtain a radius $\rho_j$ and a corresponding angle $\varphi_j$:

$$\rho_j = \sqrt{\left(\frac{I_j}{I_{sc}}\right)^2 + \left(\frac{V_j}{V_{oc}}\right)^2} \text{ and } \varphi_j = Arctan\left(\frac{I_j \times V_{oc}}{V_j \times I_{sc}}\right)$$

5. The method according to any one of claims 2 to 4, wherein the estimating (32) of a short-circuit current value comprises:

- calculating (34) a power versus voltage characteristic from the current and voltage measurements,
- modelling (36), in a first linear region of the power versus voltage characteristic, the power versus voltage characteristic by a first linear or polynomial power model, the short circuit current value being estimated (38) by the zero derivative of said first power model.

6. The method according to any one of claims 2 to 5, wherein the estimating of an open circuit voltage value comprises:

- calculating (40) a power versus current characteristic from the current and voltage measurements,
- modelling (42), in a second linear region of the power versus voltage characteristic, the power versus current characteristic by a second linear or polynomial power model, the open circuit voltage value being estimated (44) by the zero derivative of said second power model.

7. The method according to any one of claims 1 to 6, wherein the first electrical model for approximating said I(V) curve, is a so-called single-diode electrical model, defined by the following equation in polar coordinate space:

$$I_{ph} + I_0 - \rho(\varphi) \times \frac{\cos(\varphi) + \left(R_s + R_p\right) \times \sin(\varphi)}{R_p} - I_0 \times e^{\rho(\varphi) \times \frac{\cos(\varphi) + R_s \times \sin(\varphi)}{N}} = 0$$

Where $\rho(\varphi)$ is the radius corresponding to the angle $\varphi$ according to the first approximation model, $I_{ph}$, $I_0$, $R_s$, $R_p$ and N are parameters of said first electrical model.

8. The method according to any one of the claims 1 to 7, further comprising determining a monitoring period duration for the acquisition of the current and voltage measurements, based on a previously stored table of monitoring period durations depending on physical characteristics of the photovoltaic module string comprising at least one photovoltaic module to be monitored.

9. The method according to any one of the claims 1 to 8, further comprising displaying (60) a diagnostic result on a human-machine interface, indicating a state of good working order or a presence of an anomaly in the operation of said at least one photovoltaic module.

10. A device for diagnosing the operation of a string of photovoltaic modules comprising at least one photovoltaic module, adapted to obtain, from an acquisition module, a series of current and voltage measurements measured during a monitoring period, forming a curve of current as a function of voltage, known as the I(V) curve, the device being **characterised in that** it comprises a computing processor configured to implement:

- a module (72) for transforming into polar coordinates, each pair of current and voltage values of the I(V) curve being transformed into a corresponding radius-angle pair,
- a module (74) for calculating parameters of a first electrical model approximating said I(V) curve, and a first cost representative of a deviation between said first model and said I(V) curve, by implementing a distance metric in polar coordinate space,
- a module (76) for calculating parameters of a second electrical model approximating said I(V) curve, and a second cost representative of a deviation between said second model and said I(V) curve, by implementing a distance metric in polar coordinate space,
- a module (78) for selecting an electrical model for estimating the I(V) curve from said first electrical approximation model and second electrical approximation model according to the first and second costs,
- a module (80) for diagnosing operation as a function of the value of at least one parameter of the selected electrical estimation model.

11. The device according to claim 10, further comprising a module (71) for estimating a short circuit current value $I_{sc}$ and an open circuit voltage value $V_{oc}$ from the acquired current and voltage values.

12. A system for diagnosing the operation of a photovoltaic module string comprising at least one photovoltaic module, comprising a module (22) for acquiring values of a series of current and voltage measurements measured during a monitoring period of at least one photovoltaic module of said photovoltaic module string, and a device for diagnosing operation according to claims 10 or 11.

13. A computer program having instructions including software instructions which, when executed by a programmable electronic device, implement a method of diagnosing the operation of a photovoltaic module string comprising at least one photovoltaic module according to claims 1 to 9.

**FIG.1**

FIG.2

FIG.3

FIG.4

**FIG.5**

EP 4 199 348 B1

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1860499

- FR 3074611 A1

**Littérature non-brevet citée dans la description**

- Compound Admittance Matrix Estimation of Three-Phase Untransposed Power Distribution Grids Using Synchrophasor Measurements. **GUPTA RAHUL KUMAR et al.** IEEE TRANSACTIONS ON INSTRUMENTATION AND MEASUREMENT. IEEE, 24 Juin 2021, vol. 70, 1-13